# EUROPÄISCHE PATENTSCHRIFT

(11) **EP 0 438 688 B1**
(45) Veröffentlichungstag und Bekanntmachung des Hinweises auf die Patenterteilung: **15.09.1993**
(21) Anmeldenummer: 90123721.4
(22) Anmeldetag: 10.12.1990
(51) Int. Cl.: F16K 27/10, F16K 1/36

(54) **Absperrarmatur**
Shutt-off valve
Vanne d'arrêt

(30) Priorität: 20.01.1990 DE 4001605
(43) Veröffentlichungstag der Anmeldung: 31.07.1991
(73) Patentinhaber: KSB Aktiengesellschaft, 67227 Frankenthal (DE)
(72) Erfinder: Bartoschek, Manfred, W-6710 Frankenthal (DE); Stock, Hans-Georg, W-6700 Ludwigshafen 28 (DE)

(56) Entgegenhaltungen:
- EP-A- 0 239 009
- DE-C- 25 496
- DE-C- 344 188
- DE-C- 719 093
- DE-U- 8 909 262
- US-A- 1 467 486

## Beschreibung

Die Erfindung betrifft eine Absperrarmatur mit einem schräg zur Achse der Armaturenspindel angeordneten Armaturensitz und einem Verschlußstück, wobei die Dichtfläche des Verschlußstückes einen Ausschnitt aus einer Kegelmantelfläche darstellt, deren Achse exzentrisch zu der in der Achse der Armaturensspindel gelegenen Befestigung des Verschlußstückes angeordnet ist und wobei das Verschlußstück bezüglich seiner mittleren Berührungsebene mit dem Armaturensitz eine Ellipse beschreibt.

Eine derartige Absperrarmatur ist bekannt aus der EP-A-0 239 009. Die verschiedenen Varianten des in der Schrift gelehrten Verschlußstückes sind alle als massive Teile ausgebildet. Damit entsprechen die Verschlußstücke der Art der in der Schrift dargestellten dickwandigen Gehäuse, für deren Herstellung sich vor allem die bewährten Gießverfahren anbieten. Die Vorteile solcher Absperrarmaturen, insbesondere deren günstige Strömungsführung, ließen den Wunsch entstehen, deren charakteristische Merkmale auf weitere, aus einem anderen Material gefertigte Armaturen zu übertragen.

Durch die nicht vorveröffentlichten EP-A-0 454 745 und EP-A-0 454 747 sind ein als Trennwand und Träger der Sitzfläche eines Hubventils dienendes Blechteil und ein Armaturengehäuse aus Blech bekannt, welche einzeln oder in Kombination miteinander einsetzbar sind. Die Vorteile solcher aus Blech hergestellten Armaturenteile liegen auf der Hand. Erwähnt seien hier nur das geringe Gewicht, die rationelle Fertigung und die Möglichkeit des Einsatzes hochwertiger Werkstoffe bei relativ geringen Materialkosten. Es ist daher nur konsequent, wenn auch der Wunsch nach einem Verschlußstück aus Blech entsteht.

Nun sind zwar vergleichsweise einfache, etwa tellerförmige Verschlußstücke aus Blech für Ventile bekannt. Verschlußstücke für Absperrarmaturen mit schräg zur Achse der Armaturenspindel angeordnetem Armaturensitz, deren Dichtfläche einen Ausschnitt aus einer Kegelmantelfläche bildet, sind aber zwangsläufig ungleich komplexere Gebilde als ein Ventilteller. So wurden denn bisher derartige Verschlußstücke als massive Teile hergestellt, wofür neben der bereits zitierten EP-A-0 239 009 noch die nicht vorveröffentlichte WO-A-90/08276 ein Beispiel gibt.

Der Erfindung liegt die Aufgabe zugrunde, ein Verschlußstück der eingangs genannten Art zu schaffen, welches aus Blech zu fertigen ist und das vor allem für den Einsatz in Blecharmaturen geeignet ist.

Diese Aufgabe wird erfindungsgemäß dadurch gelöst, daß das Verschlußstück aus einem Blechkörper gebildet wird, der eine in bezug auf die Achse der Armaturenspindel mittig angeordnete, der Befestigung des Verschlußstückes an der Armaturenspindel dienende, gegebenenfalls mit einer Öffnung versehene Fläche aufweist, die in einen Bereich übergeht, welcher in einem in Richtung der Armaturenspindelachse verlaufenden Längsschnitt stufenförmig ausgebildet ist und an den sich ein die Dichtfläche bildender bzw. die Dichtung tragender Rand anschließt.

Die abhängigen Ansprüche nennen vorteilhafte Ausgestaltungen der Erfindung.

Hervorzuheben ist, daß der Erfindungsgegenstand sowohl als hartdichtendes wie auch als weichdichtendes Verschlußstück ausgebildet sein kann. Überdies kann bei Anordnung einer Weichdichtung der Blechkörper eine als feuersichere Notdichtung dienende Dichtfläche besitzen.

Schließlich ergibt sich eine zweckmäßige Ausgestaltung der Erfindung dadurch, daß das Zentrum der Verbindung zwischen der Armaturenspindel und dem Verschlußstück im Mittelpunkt der von der Berührungsebene des Verschlußstückes beschriebenen Ellipse liegt. Hieraus resultiert eine im Mittelpunkt der Dichtungsellipse liegende Krafteinleitung, also eine gleichmäßige Belastung der schließenden Dichtung über den gesamten Umfang.

Ein Verkanten oder eine ungleichmäßige Belastung der Dichtung werden durch diese Maßnahme ausgeschlossen.

Anhand von Ausführungsbeispielen wird die Erfindung näher erläutert. Die Zeichnung zeigt in
- Fig. 1: einen Längsschnitt durch ein erfindungsgemäßes Verschlußstück, das in seiner einfachsten, hartdichtenden Form von einem Blechkörper gebildet wird, in
- Fig. 2: ein ebenfalls im Längsschnitt dargestelltes Blechteil, das zusammen mit einem der Fig. 1 entsprechenden Blechkörper einen Dichtring zu tragen vermag, in
- Fig. 3: eine Absperrarmatur mit einem der Fig. 1 entsprechenden hartdichtenden Verschlußstück, und in
- Fig. 4: eine Absperrarmatur mit einem weichdichtenden Verschlußstück, welches den Fig. 1 und 2 entsprechende Blechkörper bzw. -teile umfaßt.

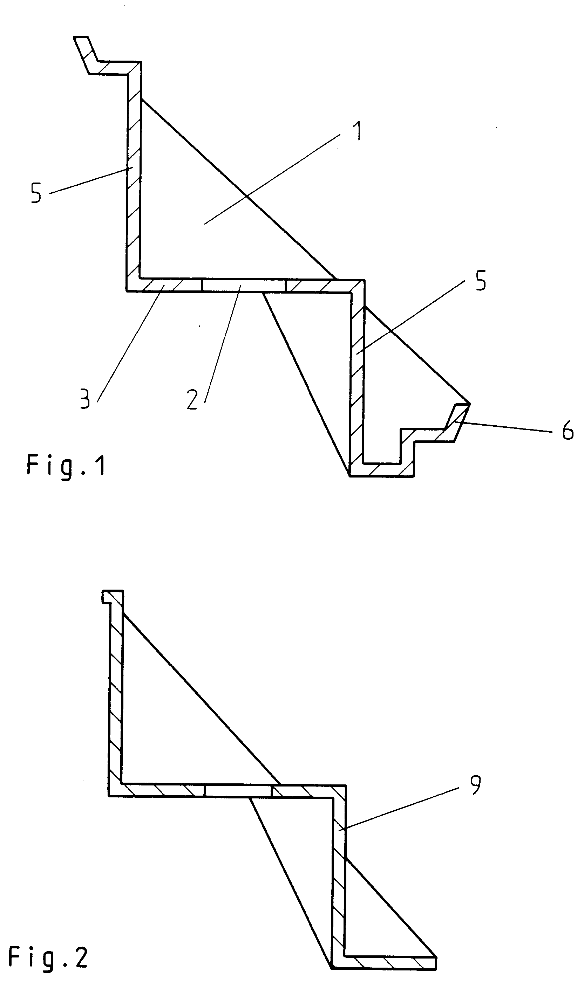

Der in der Fig. 1 dargestellte Blechkörper (1) stellt gewissermaßen die Basisform eines Verschlußstückes dar. Er besitzt eine mit einer Öffnung (2) versehene Fläche (3), über die die Verbindung mit einer Armaturenspindel (4) erfolgt. Die Öffnung (2) ist exzentrisch zur Achse der Kegelmantelfläche angeordnet, aus welcher die Dichtfläche des Verschlußstückes einen Ausschnitt darstellt. An die Fläche (3) schließt sich ein im dargestellten Längsschnitt als Stufen erkennbarer Bereich (5) an, der in einen Rand (6) überleitet. In einer Draufsicht, die der Mittelsenkrechten der mittleren Berührungsebene des Verschlußstückes mit dem Armaturensitz (7) folgt, besitzt der Blechkörper (1) eine ovale Kontur (hier nicht dargestellt).

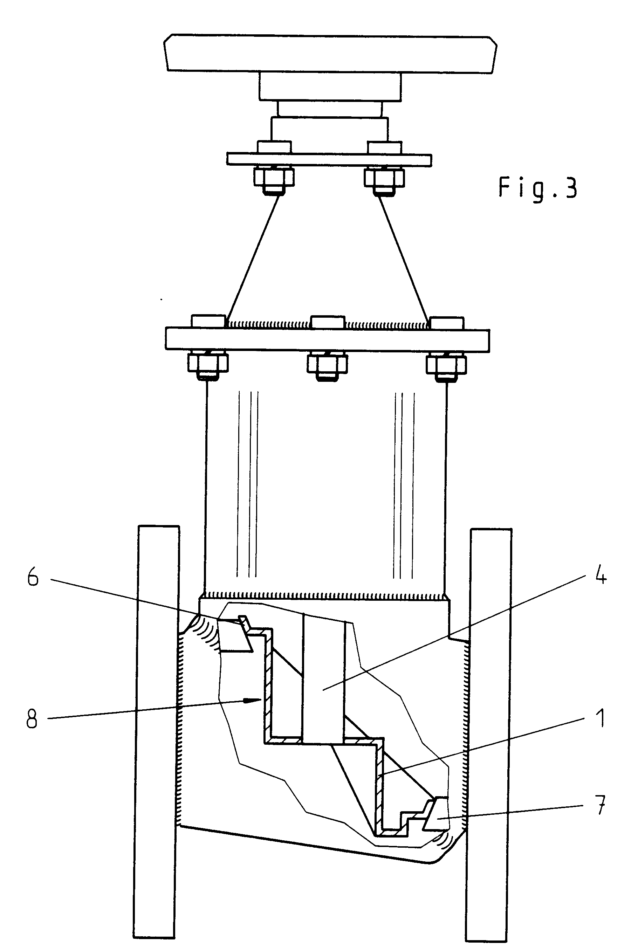

Wird der Blechkörper (1), wie in der Fig. 3 schematisch dargestellt, als alleiniges Teil mit der Armaturenspindel (4) verbunden, so bildet er ein hartdichtendes Verschlußstück (8), dessen Rand (6) mit dem Armaturensitz (7) zusammenwirkt.

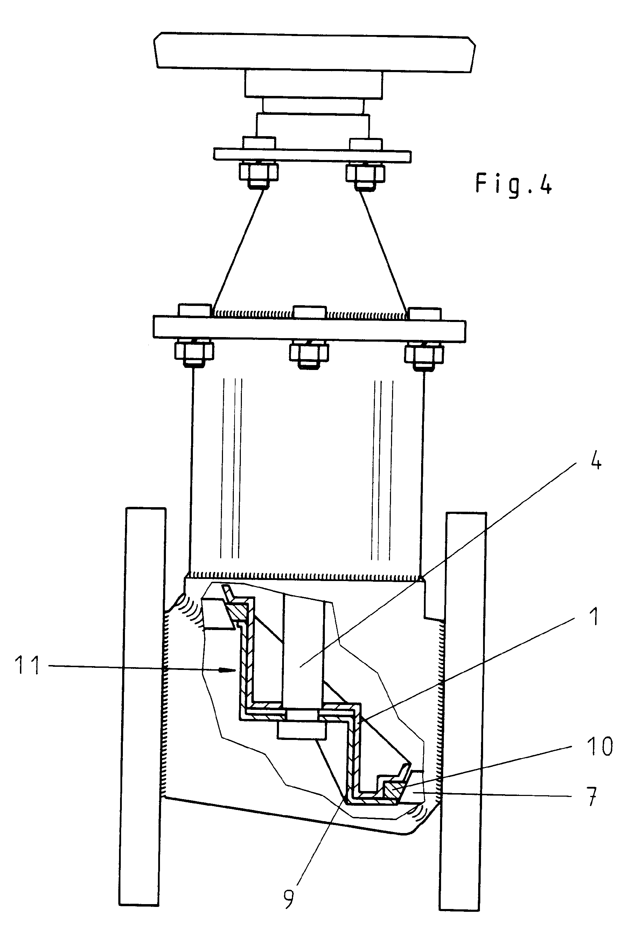

Eine Kombination des Blechkörpers (1) mit einem Blechteil (9), wie es die Fig. 2 zeigt, und ein von beiden eingeschlossener Dichtring (10) bilden ein weichdichtendes Verschlußstück (11). Die Fig. 4 zeigt eine mit einem solchen Verschlußstück (11) ausgestattete Absperrarmatur. Der Rand (6) des Blechkörpers (1) trägt hier zwar noch die Dichtung, übernimmt aber die Dichtfunktion nicht mehr unmittelbar.

Aus der Zusammenschau der Fig. 3 und 4 ist aber leicht erkennbar, daß der Blechkörper (1) auch bei der Absperrarmatur der Fig. 4 die alleinige Dichtfunktion übernehmen könnte. Der Blechkörper (1) vermag also eine bei Zerstörung des Dichtringes (10) einsetzende Sicherheitsfunktion auszuüben.

Die Übernahme der Dichtfunktion durch den Blechkörper (1) bei Zerstörung der Dichtung eines weichdichtenden Verschlußstückes ist eine sich für das erfindungsgemäße Verschlußstück ergebende vorteilhafte Möglichkeit, die ebenso bei einemnicht dargestellten - mit einer Elastomerummantelung versehenen Blechkörper genutzt werden kann.

## Patentansprüche

1. Absperrarmatur mit einem schräg zur Achse der Armaturenspindel (4) angeordneten Armaturensitz (7) und einem Verschlußstück (8,11), wobei die Dichtfläche des Verschlußstückes (8,11) eine Ausschnitt aus einer Kegelmantelfläche darstellt, deren Achse exzentrisch zu der in der Achse der Armaturenspindel (4) gelegenen Befestigung des Verschlußstückes (8,11) angeordnet ist, wobei das Verschlußstück (8,11) bezüglich seiner mittleren Berührungsebene mit dem Armaturensitz eine Ellipse beschreibt, **dadurch gekennzeichnet,** daß das Verschlußstück (8,11) aus einem Blechkörper (1) gebildet wird, der eine in bezug auf die Achse der Armaturenspindel (4) mittig angeordnete, der Befestigung des Verschlußstückes (8,11) an der Armaturenspindel (4) dienende, gegebenenfalls mit einer Öffnung (2) versehene Fläche (3) aufweist, die in einen Bereich (5) übergeht, welcher in einem in Richtung der Armaturenspindelachse verlaufenden Längsschnitt stufenförmig ausgebildet ist und an den sich ein die Dichtfläche bildender bzw. die Dichtung tragender Rand (6) anschließt.

2. Absperrarmatur nach Anspruch 1, dadurch gekennzeichnet, daß der Blechkörper (1) an seinem Rand (6) eine metallische Dichtfläche besitzt.

3. Absperrarmatur nach Anspruch 1, dadurch gekennzeichnet, daß der Blechkörper (1) an seinem Rand (6) eine Weichdichtung trägt.

4. Absperrarmatur nach den Ansprüchen 1 und 3, dadurch gekennzeichnet, daß der Blechkörper (1) ganz oder teilweise mit einer Ummantelung, insbesondere einer Elastomerummantelung versehen ist.

5. Absperrarmatur nach den Ansprüchen 1 und 3, dadurch gekennzeichnet, daß der Blechkörper (1) einen Dichtring (10) trägt.

6. Absperrarmatur nach den Ansprüchen 1, 3 und 5, dadurch gekennzeichnet, daß der Dichtring (10) zwischen dem Blechkörper (1) und einem mit diesem verbundenen Blechteil angeordnet ist.

7. Absperrarmatur nach den Ansprüchen 1, 3 und 5, dadurch gekennzeichnet, daß der Dichtring (10) zwischen dem Blechkörper (1) und einem weiteren, mit der Armaturenspindel (4) verbundenen Blechteil (9) angeordnet ist.

8. Absperrarmatur nach Anspruch 1 und einem oder mehreren der folgenden Ansprüche, gekennzeichnet durch einen Dichtring (10) aus Elastomer.

9. Absperrarmatur nach Anspruch 1 und einem oder mehreren der folgenden Ansprüche, gekennzeichnet durch einen Dichtring (10) aus Thermoplast.

10. Absperrarmatur nach Anspruch 1 und einem oder mehreren der folgenden Ansprüche, dadurch gekennzeichnet, daß der Blechkörper eine bei Zerstörung der Weichdichtung (10) im Armaturensitz (7) zur Anlage kommende metallische Dichtfläche besitzt.

11. Absperrarmatur nach Anspruch 1 und einem oder mehreren der folgenden Ansprüche, dadurch gekennzeichnet, daß das Zentrum der Verbindung zwischen der Armaturenspindel (4) und dem Verschlußstück (8, 11) im Mittelpunkt der von der mittleren Berührungsebene des Verschlußstückes (8, 11) beschriebenen Ellipse liegt.

## Claims

1. A shut-off valve comprising a valve seat (7), which is arranged obliquely in relation to the axis of the valve stem (4), and a valve member (8 and 11), the sealing surface of the valve member (8 and 11) constituting a section of a conical surface whose axis is arranged eccentrically in relation to the attachment, which is arranged in the axis of the valve stem (4), of the valve member (8 and 11), the valve member's (8 and 11) center plane in contact with the valve seat describing an ellipse, characterized in that the valve member (8 and 11) is constituted by a sheet metal body (1) whose one surface (3) is arranged centrally in relation to the axis of the valve stem (4) and serves for the attachment of the valve member (8 and 11) on the valve stem (4) and if necessary has an opening (2), said surface merging into a zone (5) which is formed in a longitudinal section, extending in the direction of the axis of the valve stem, in steps and is adjoined by a rim (6) which constitutes the sealing surface or, respectively, bears the seal.

2. The shut-off valve as claimed in claim 1, characterized in that the sheet metal body (1) has a metallic sealing surface on its rim (6).

3. The shut-off valve as claimed in claim 1, characterized in that on its rim (6) the sheet metal body (1) bears a soft seal.

4. The shut-off valve as claimed in claim 1 and in claim 3, characterized in that sheet metal body (1) is completely or partly provided with a casing and more particularly with an elastomeric casing.

5. The shut-off valve as claimed in claim 1 and in claim 3, characterized in that the sheet metal body (1) bears a sealing ring (10).

6. The shut-off valve as claimed in claims 1, 3 and 5, characterized in that the sealing ring (10) is arranged between the sheet metal body (1) and a sheet metal part connected with it.

7. The shut-off valve as claimed in claims 1, 3 and 5, characterized in that the sealing ring (10) is arranged between the sheet metal body (1) and a further sheet metal part (9) connected with the valve stem (4).

8. The shut-off valve as claimed in claim 1 and one or more of the following claims, characterized by a sealing ring (10) of elastomeric material.

9. The shut-off valve as claimed in claim 1 and one or more of the following claims, characterized by a sealing ring (10) of thermoplastic material.

10. The shut-off valve as claimed in claim 1 and one or more of the following claims, characterized in that the sheet metal body possesses a metallic sealing surface adapted to come into engagement with the valve seat (7) following damage to the soft seal (10).

11. The shut-off valve as claimed in claim 1 and one or more of the following claims, characterized in that center of the connection between the valve stem (4) and the valve member (8 and 11) is at the center point of the ellipse described by the center plane of contact of the valve member (8 and 11).

## Revendications

1. Dispositif d'arrêt avec siège de robinetterie (7) et une pièce d'arrêt (8, 11) placé de biais sur l'axe de la broche du robinet (4), la surface d'étanchéité de la pièce d'arrêt (8, 11) représentant un secteur de l'aire latérale du cône, dont l'axe est placé de façon excentrique par rapport à la fixation de la pièce d'arrêt (8, 11) située dans l'axe de la broche du robinet (4), la pièce d'arrêt (8, 11) décrivant une ellipse en ce qui concerne son plan médian de contact avec le siège du robinet caractérisé en ce que la pièce d'arrêt (8, 11) est formée d'un corps en tôle (1) qui présente une surface (3) placée au milieu par rapport à l'axe de la broche du robinet (4), servant de fixation de la pièce d'arrêt (8, 11) sur la broche du robinet (4) et munie, le cas échéant, d'une ouverture (2), surface qui passe dans une zone (5) qui a la forme d'étages dans une section longitudinale s'étendant dans le sens de l'axe de la broche du robinet et à laquelle fait suite un bord (6) formant la surface d'étanchéité ou portant le dispositif d'étanchéité.

2. Dispositif d'arrêt selon la revendication 1 caractérisé en ce que le corps en tôle (1) possède sur son bord (6) une surface métallique d'étanchéité.

3. Dispositif d'arrêt selon la revendication 1 caractérisé en ce que le corps en tôle (1) porte sur son bord (b) un joint mou.

4. Dispositif d'arrêt selon les revendications 1 et 3 caractérisé en ce que le corps en tôle (1) est enrobé entièrement ou en partie d'une enveloppe, en particulier d'une enveloppe en élastomère.

5. Dispositif d'arrêt selon les revendications 1 et 3 caractérisé en ce que le corps en tôle (1) porte une bague d'étanchéité (10).

6. Dispositif d'arrêt selon les revendications 1, 3 et 5 caractérisé en ce que la bague d'étanchéité (10) est placée entre le corps en tôle (1) et une pièce de tôle reliée à celui-ci.

7. Dispositif d'arrêt selon les revendications 1, 3 et 5 caractérisé en ce que la bague d'étanchéité (10) est placée entre le corps en tôle (1) et une autre pièce de tôle (9) reliée à la broche du robinet (4).

8. Dispositif d'arrêt selon la revendication 1 et une ou plusieurs des revendications suivantes caractérisé par une bague d'étanchéité (10) en élastomère.

9. Dispositif d'arrêt selon la revendication 1 et une ou plusieurs des revendications suivantes caractérisé par une bague d'étanchéité (10) en thermoplastique.

10. Dispositif d'arrêt selon la revendication 1 et une ou plusieurs des revendications suivantes caractérisé en ce que le corps en tôle possède une surface métallique d'étanchéité qui vient s'appliquer lorsque le joint mou du siège (7) du dispositif d'arrêt est endommagé.

11. Dispositif d'arrêt selon la revendication 1 et une ou plusieurs des revendications suivantes caractérisé en ce que le centre de la liaison entre la broche du robinet (4) et la pièce d'arrêt (8, 11) est situé au centre de l'ellipse décrite par le plan médian de contact de la pièce d'arrêt (8, 11).
